# EUROPEAN PATENT SPECIFICATION

(11) **EP 3 156 255 B1**
(45) Date of publication and mention of the grant of the patent: **15.08.2018**
(21) Application number: 15806197.8
(22) Date of filing: 21.04.2015
(51) Int. Cl.: B60C 3/04, B29C 33/02, B29D 30/06

(54) **PNEUMATIC TIRE AND MOLD FOR VULCANIZING TIRE**
LUFTREIFEN UND FORM ZUM VULKANISIEREN VON REIFEN
BANDAGE PNEUMATIQUE ET MOULE DE VULCANISATION DE BANDAGE PNEUMATIQUE

(30) Priority: 11.06.2014 JP 2014120463
(43) Date of publication of application: 19.04.2017
(73) Proprietor: Bridgestone Corporation, Tokyo 104-8340 (JP)
(72) Inventor: MAEGAKI, Koji, Tokyo 104-8340 (JP)
(74) Representative: Oxley, Robin John George
(86) International application number: PCT/JP2015/002167
(87) International publication number: WO 2015/190027

(56) References cited:
- EP-A2- 1 162 084
- EP-A2- 1 164 033
- WO-A1-01/17801
- WO-A1-2014/073678
- JP-A- H 058 613
- JP-A- H07 228 104
- JP-A- H11 334 312
- JP-B2- 4 346 372
- US-A- 4 702 293
- US-A1- 2005 110 194
- US-A1- 2008 084 007
- US-A1- 2010 139 830

## Description

### TECHNICAL FIELD

This disclosure relates to a pneumatic tire and a mold for vulcanizing a tire. Specifically, this disclosure relates to a low profile tire with an aspect ratio of 60% or less and to a mold, for vulcanizing a tire, that is used to manufacture the low profile tire.

### BACKGROUND

In recent years, as vehicles have higher performance, tires have tended towards a lower profile (a lower aspect ratio). As the aspect ratio decreases, the section height of the tire decreases, which is disadvantageous in terms of the tire's endurance when supporting the same load. Therefore, in order to guarantee the endurance of a low profile tire, the gauge of the tire's side portion and bead portion is increased.

When manufacturing a tire, a tire in an unvulcanized state (green tire) is vulcanized using a mold for vulcanizing a tire. In some of these molds for vulcanizing a tire, the part for molding the side portion and the part for molding the crown portion are separated (see JP H06-023864 A (PTL 1)). Attention is also drawn to the disclosures of WO 2014/073678 A1, EP 1164033 A2, EP 1162084 A2, US 2010/139830 A1, US 2008/084007 A1 and US 2005/110194 A1.

### CITATION LIST

### Patent Literature

PTL 1: JP H06-023864 A

### SUMMARY

### (Technical Problem)

In the aforementioned low profile tire, a phenomenon has been discovered whereby the green tire is vulcanized in a state such that the tire widthwise central position of the green tire and the widthwise central position of the mold for vulcanizing a tire are misaligned, and the tire widthwise central position of the tread portion of the pneumatic tire that is the finished product is misaligned (also referred to below as center misalignment).

It would therefore be helpful to provide a pneumatic tire in which the tire widthwise central position of the tread portion is at an appropriate position and a mold, for vulcanizing a tire, that is used to manufacture this pneumatic tire.

### (Solution to Problem)

I thoroughly investigated how to solve the above problem. As a result, I discovered that the aforementioned center misalignment occurs for the following sort of reason. In order to manufacture a tire with a thick gauge in the side portion and the bead portion, the gauge of the side portion and the bead portion in the green tire also needs to be made thick. In the green tire, thickening the gauge of the side portion and the bead portion increases the rigidity of the side portion, giving the green tire a nearly rectangular shape when viewing a cross-section of the green tire in the width direction.

On the other hand, a mold for vulcanizing a tire generally has a curved shape. Therefore, a green tire with a rectangular cross-section does not follow the shape of the mold at the time of vulcanizing, causing a gap between the green tire and the mold. After being softened due to heat, the green tire ends up shifting in the direction of the mold for forming the side portion so as to fill the gap.

I discovered that this is the reason why the center position is misaligned between the green tire and the mold for vulcanizing a tire, causing center misalignment to occur in the tread portion of the pneumatic tire that is the finished product.

I discovered that by modifying the shape of the part for molding the side portion in a mold for vulcanizing a tire with a low aspect ratio, the shape of the side portion in the pneumatic tire can be controlled to be a predetermined shape, thereby resolving the aforementioned problem and completing this disclosure.

My tire has been conceived based on the discoveries described above, and the primary structure thereof is as follows.

My pneumatic tire has a rim diameter of 50.8 cm (20 inches) or more and an aspect ratio of 60% or less, wherein
a ratio dl/Ll is 0.15 or less, where in a cross-section in a tire width direction before rim assembly, a bead heel T is an intersection between an extension line m1 of a bead base surface and an extension line m2 of a bead back surface, M1 is a midpoint of a line segment A1 connecting the bead heel T with a position P1 of the pneumatic tire corresponding to a split position, L1 in millimeters is a length of the line segment A1, and d1 in millimeters is a distance from the midpoint M1 to an intersection between a tire outer surface and a normal line B1 to the line segment A1 passing through the midpoint M1.

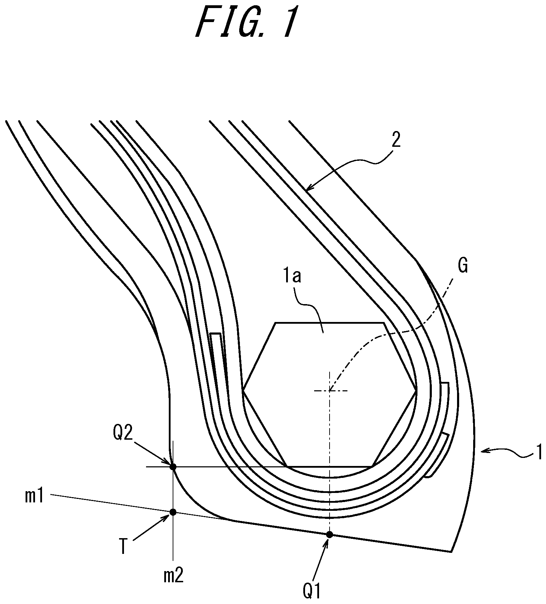

As illustrated in the partial cross-sectional diagram, in the tire width direction, of an enlargement of the bead portion 1 in FIG. 1, the "extension line m1 of a bead base surface" refers to a tangent at an intersection Q1 between the bead base surface and a line from the center of gravity G of the bead core 1a inward in the tire radial direction along the tire radial direction.

As also illustrated in FIG. 1, the "extension line m2 of a bead back surface" refers to a line that is perpendicular to the tire width direction and passes through a point Q2 in a cross-section in the tire width direction, where Q2 is the intersection between the bead back surface and a line that is parallel to the tire width direction and passes through the innermost point, in the tire radial direction, of the bead core 1a.

"Before rim assembly" refers to the state before the tire is mounted on an applicable rim, and an "applicable rim" is a standard rim as described in a valid industrial standard for the region in which the tire is produced or used, such as the YEAR BOOK by the Japan Automobile Tyre Manufacturers Association (JATMA) in Japan, the STANDARD MANUAL by the European Tyre and Rim Technical Organisation (ETRTO) in Europe, the YEAR BOOK by the TIRE AND RIM ASSOCIATION INC. (TRA) in the United States of America, and the like.

Furthermore, the "position corresponding to a split position" refers to the position that corresponds to the split position of a mold, for vulcanizing a tire, that is used to manufacture the aforementioned pneumatic tire. This split position is the portion where a ridge is formed by inflowing rubber at the time of vulcanization.

My mold for vulcanizing a tire is used to manufacture a pneumatic tire with a rim diameter of 50.8 cm (20 inches) or more and an aspect ratio of 60% or less, the mold comprising:
a crown portion molding part that forms a crown portion of the pneumatic tire and a side portion molding part that forms a side portion of the pneumatic tire and is separate from the crown portion molding part; wherein
the side portion molding part includes a curved portion capable of abutting a green tire; and
a ratio d2/L2 is 0.15 or less, where M2 is a midpoint of a line segment A2 connecting a split position P2 of the mold for vulcanizing a tire with a radial innermost point S of the curved portion, L2 in millimeters is a length of the line segment A2, and d2 in millimeters is a distance from the midpoint M2 to an intersection between the curved portion and a normal line B2 to the line segment A2 passing through the midpoint M2.

"Inward in the radial direction" refers to the side corresponding to the inside, in the radial direction, of the green tire and of the pneumatic tire after vulcanization.

The "split position" refers to the border between the crown portion molding part and the side portion molding part at the time of vulcanizing the green tire.

### (Advantageous Effect)

I can thus provide a pneumatic tire in which the tire widthwise central position of the tread portion is at an appropriate position and a mold, for vulcanizing a tire, that is used to manufacture this pneumatic tire.

### BRIEF DESCRIPTION OF THE DRAWINGS

In the accompanying drawings:
FIG. 1 is a partial cross-sectional diagram in the tire width direction illustrating an enlargement of the bead portion;
FIG. 2 is a cross-sectional diagram in the tire width direction of a pneumatic tire according to one of the disclosed embodiments; and
FIG. 3 is a cross-sectional diagram in the width direction of a mold, for vulcanizing a tire, according to one of the disclosed embodiments.

### DETAILED DESCRIPTION

The following describes embodiments of this disclosure in detail with reference to the drawings.

### Pneumatic Tire

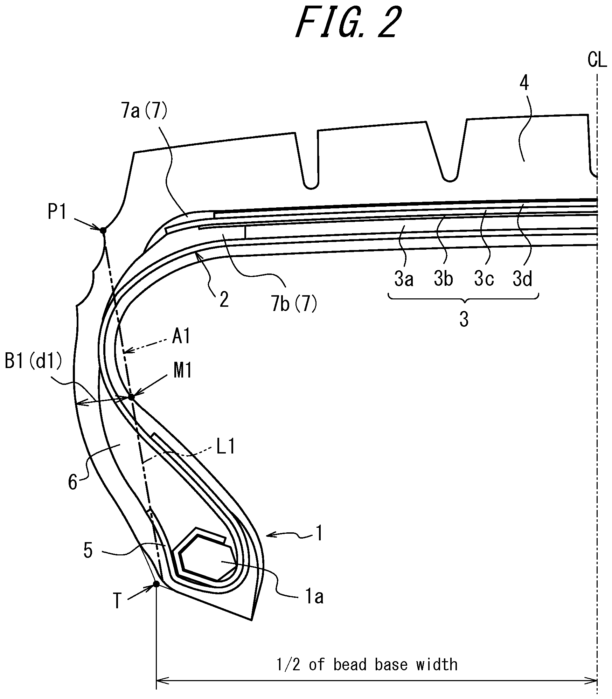

FIG. 2 is a cross-sectional diagram in the tire width direction of a pneumatic tire (also referred to below simply as a tire) according to one of the disclosed embodiments. In FIG. 2, only one half, centered on the tire equatorial plane CL, in the tire width direction is illustrated, but the other half in the tire width direction also has the same structure.

As illustrated in FIG. 2, the tire of this embodiment includes a carcass 2 formed by one or more (one in the illustrated example) carcass plies wound toroidally around a pair of bead portions 1 (only one being illustrated in FIG. 1). This tire has a so-called wind bead structure. The carcass 2 is wound around the bead core 1a, distortion of the ply edge of the carcass 2 is suppressed, and rigidity of the bead portion 1 is appropriately reduced. Steel, organic fiber, or the like may, for example, be used as the material of the cords in the carcass 2.

As illustrated in FIG. 2, a belt 3 and tread 4 are included in this order in the tire radial direction of the crown portion of the carcass 2. The belt 3 is formed by one or more (four in the illustrated example) belt layers 3a to 3d.

In the illustrated example, the belt layers 3a and 3b are circumferential belt layers formed by cords that extend approximately in the tire circumferential direction, and the belt layers 3c and 3d are inclined belt layers formed by cords that extend so as to intersect between the layers.

In the illustrated example, the belt layer 3c that is third from the inner side in the tire radial direction is the widest in the tire width direction. The belt layers then decrease in width in the tire width direction in the order of the belt layer 3b that is second from the inner side in the tire radial direction, the belt layer 3d that is fourth from the inner side in the tire radial direction, and the belt layer 3a that is located innermost in the tire radial direction. Steel cords or organic fiber cords, for example, may be used as the cords of the belt layers.

Any belt structure may be used in my pneumatic tire. For example, the number of belt layers, the width of each belt layer, the material, and the like may be determined appropriately.

Furthermore, as illustrated in FIG. 2, on the outer circumferential side of the carcass 2, a steal chafer 5 forming one layer is disposed as a reinforcing member. This steel chafer 5 extends along the body of the carcass 2, turns back around the bead core 1a, and extends outward in the tire radial direction.

Furthermore, a bead filler 6 is disposed on the outside of the bead core 1a in the tire radial direction. The bead filler 6 has a triangular cross-sectional shape and is tapered so that the width in the tire width direction decreases from the inside in the tire radial direction towards the outside in the tire radial direction.

In my pneumatic tire, the bead filler 6 is not an essential constituent element, and when the bead filler 6 is included, the structure thereof is not limited to the aforementioned example.

Furthermore, as illustrated in FIG. 2, the tire of this embodiment includes two layers of cushion rubber 7, i.e. cushion rubber 7a disposed on the outside, in the tire width direction, of the inclined belts 3c and 3d and cushion rubber 7b disposed on the outside, in the tire width direction, of the circumferential belts 3a and 3b and on the inside, in the tire radial direction, of the inclined belt layer 3c.

The tire of this embodiment has a rim diameter of 50.8 cm (20 inches) or more and an aspect ratio of 60% or less.

As illustrated in FIGS. 1 and 2, in the tire of this embodiment the ratio dl/Ll is 0.15 or less, where in a cross-section in a tire width direction before rim assembly, a bead heel T is the intersection between an extension line m1 of a bead base surface and an extension line m2 of a bead back surface, M1 is the midpoint of a line segment A1 connecting the bead heel T with a position P1 of the tire corresponding to a split position, L1 in millimeters is the length of the line segment A1, and d1 in millimeters is the distance from the midpoint M1 to the intersection between the tire outer surface and a normal line B1 to a line segment L1 passing through the midpoint M1.

When the distance in the tire width direction between bead heels T at the time the tire is mounted on an applicable rim is the "bead base width," then the aforementioned ratio dl/Ll is a value measured by matching the distance in the tire width direction between bead heels T before rim assembly to the "bead base width."

The following describes the effects of this embodiment.

According to this embodiment, by setting the aforementioned ratio dl/Ll to be 15% or less, the area of the green tire near the bead heel reliably abuts against the side portion molding part of the mold for vulcanizing a tire at the time of vulcanization, allowing the green tire to be reliably supported at the curved portion (from the split position of the mold for vulcanizing a tire to the radial innermost point of the curved portion), which is the portion of the side portion molding part that is capable of abutting the green tire. A gap can thus be prevented form forming between the green tire and the mold for vulcanizing a tire, and the green tire can be prevented from shifting in the mold for vulcanizing a tire during vulcanization. As the tire size increases, the aforementioned L1 and d1 both increase. Therefore, by satisfying the aforementioned ratio d1/L1, the aforementioned effect can be obtained at a variety of tire sizes.

According to the tire of this embodiment, the tire widthwise central position of the tread can thus be adjusted.

In particular, the tire of this embodiment has a wind bead structure. Hence, the durability of the bead portion can be kept high even if the ratio dl/Ll is set to 15% or less.

My pneumatic tire preferably includes a carcass formed by at least one carcass ply made of steel cords.

The reason is that in a tire that includes a carcass made from steel cords, the side portion has high rigidity, and in particular the problem of center misalignment occurs easily, but the tire widthwise central position of the tread portion can be adjusted even in such a tire.

My pneumatic tire preferably has an aspect ratio of 50% or less, and the rim diameter is preferably 57.15 cm (22.5 inches) or more. The reason is that the problem of center misalignment occurs easily in such a tire, but the tire widthwise central position of the tread portion can be adjusted even in such a tire.

Furthermore, for reasons similar to those described above, the aforementioned radio dl/Ll in my pneumatic tire is more preferably 0.12 or less and particularly preferably 0.10 or less.

### <Mold for Vulcanizing a Tire>

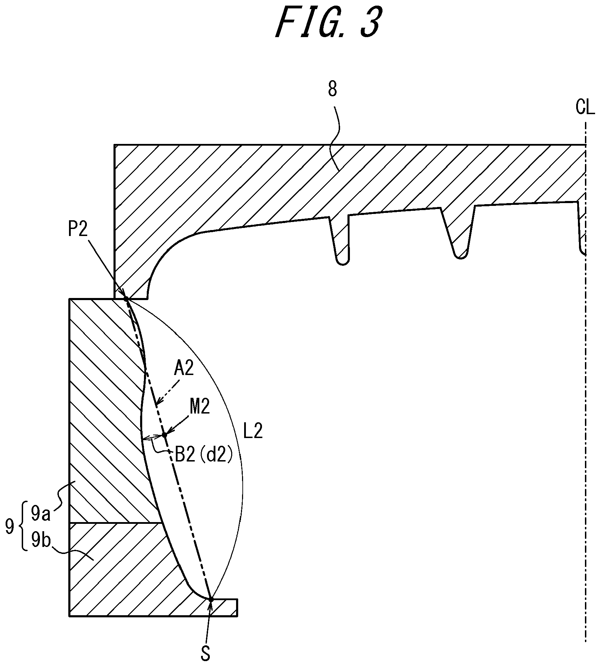

Next, a mold for vulcanizing a tire according to an embodiment of this disclosure is described. FIG. 3 is a cross-sectional diagram in the width direction of a mold, for vulcanizing a tire, according to one of the disclosed embodiments. FIG. 3 only shows one half in the width direction, with the widthwise center position CL of the mold for vulcanizing a tire as a border, but the other half in the width direction also has the same structure.

First, the mold for vulcanizing a tire of this embodiment is used to manufacture a tire having a rim diameter of 50.8 cm (20 inches) or more and an aspect ratio of 60% or less. As described above, in particular the mold is preferably used to manufacture a tire with an aspect ratio of 50% or less and is preferably used to manufacture a tire with a rim diameter of 57.15 cm (22.5 inches) or more.

As illustrated in FIG. 3, the mold for vulcanizing a tire includes a crown portion molding part 8 that molds the crown portion of the tire and a side portion molding part 9 that molds the side portion of the tire. The crown portion molding part 8 and the side portion molding part 9 are separated from each other.

In the mold for vulcanizing a tire of this embodiment, the side portion molding part 9 is further separated into an upper side portion molding part 9a and a lower side portion molding part 9b, but in my mold for vulcanizing a tire, an integrally formed side portion molding part 9 may be used.

As illustrated in FIG. 3, the side portion molding part 9 includes a curved portion capable of abutting a green tire.

As also illustrated in FIG. 3, M2 is the midpoint of a line segment A2 connecting the split position P2 of the mold for vulcanizing a tire with the radial innermost point S of the curved portion, L2 in millimeters is the length of the line segment A2, and d2 in millimeters is the distance from the midpoint M2 to the intersection between the curved portion and a normal line B2 to a line segment L2 passing through the midpoint M2.

At this time, in the mold for vulcanizing a tire of this embodiment, the ratio d2/L2 is 0.15 or less.

The following describes the effects of the mold for vulcanizing a tire according to this embodiment.

According to the mold for vulcanizing a tire of this embodiment, first, by setting the aforementioned ratio d2/L2 to be 0.15 or less, the area of the green tire near the bead heel reliably abuts against the side portion molding part 9 of the mold for vulcanizing a tire, allowing the green tire to be reliably supported at the curved portion (from the split position of the mold for vulcanizing a tire to the radial innermost point S of the curved portion), which is the portion of the side portion molding part 9 that is capable of abutting the green tire. A gap can thus be prevented form forming between the green tire and the mold for vulcanizing a tire, and the green tire can be prevented from shifting in the mold for vulcanizing a tire during vulcanization. As the tire size increases, the aforementioned L2 and d2 both undergo a corresponding increase. Therefore, by satisfying the aforementioned ratio d2/L2, the aforementioned effect can be obtained in molds for a variety of tire sizes.

According to the mold for vulcanizing a tire of this embodiment, a tire in which the tire widthwise central position of the tread is adjusted can thus be manufactured.

In my mold for vulcanizing a tire, the aforementioned radio d2/L2 is more preferably 0.12 or less and particularly preferably 0.10 or less.

The following describes Examples of this disclosure; however, this disclosure is in no way limited to these Examples.

### EXAMPLES

In order to verify the effects of this disclosure, I produced molds for vulcanizing a tire according to Examples 1 to 3 and Examples 4 to 6 and tires manufactured using these molds, and molds for vulcanizing a tire according to Comparative Examples 1 and 2 and tires manufactured using these molds. I then ran tests to evaluate the center misalignment. The tire sizes of the tires were 315/45R225 and 265/60R22.5. Tables 1 and 2 below list the specifications of the molds for vulcanizing a tire and of the tires.

A commonly used vulcanization method was used to manufacture the tires with the molds for vulcanizing a tire.

As illustrated in FIG. 3, each mold for vulcanizing a tire was for manufacturing a pneumatic tire with a rim diameter of 50.8 cm (20 inches) or more and an aspect ratio of 60% or less, and each mold included a crown portion molding part 8 and a side portion molding part 9 separate from the crown portion molding part 8. The side portion molding part 9 included a curved portion capable of abutting a green tire.

Furthermore, each pneumatic tire had the structure illustrated in FIG. 1.

Each of the aforementioned tires includes a circumferential groove extending along the tire equatorial plane. When there is no center misalignment, the groove center line of this circumferential groove (a line connecting center points of the groove width) matches the center line between tread edges in the tire width direction.

For each tire, in a state before rim assembly, the misalignment was measured in the tire width direction between the groove center line and the center line between tread edges in the tire width direction.

As described above, in Table 1, when the distance in the tire width direction between bead heels T at the time the tire is mounted on an applicable rim is the "bead base width," then the aforementioned ratio dl/Ll is a value measured by matching the distance in the tire width direction between bead heels T before rim assembly to the "bead base width."

Table 1 below lists the specifications for the molds and tires together with the measurement results.

When the measurement result was a center misalignment of 3 mm or less, the product was considered good.

**[Table 1]**

| | | Example 1 | Example 2 | Example 3 | Comparative Example 1 |
|---|---|---|---|---|---|
| Mold for vulcanizing a tire | ratio d2/L2 | 0.15 | 0.12 | 0.10 | 0.17 |
| Pneumatic tire | ratio dl/Ll | 0.15 | 0.12 | 0.10 | 0.17 |
| | carcass material | steel cords | steel cords | steel cords | steel cords |
| Center misalignment (mm) | | 3 | 1.5 | 0 | 5.5 |

**[Table 2]**

| | | Example 4 | Example 5 | Example 6 | Comparative Example 2 |
|---|---|---|---|---|---|
| Mold for vulcanizing a tire | ratio d2/L2 | 0.15 | 0.12 | 0.10 | 0.17 |
| Pneumatic tire | ratio dl/Ll | 0.15 | 0.12 | 0.10 | 0.17 |
| | carcass material | steel cords | steel cords | steel cords | steel cords |
| Center misalignment (mm) | | 2 | 0 | 0 | 4.5 |

As shown in Table 1, the tires in accordance with Examples 1 to 3 have a reduced amount of center misalignment as compared to the tire in accordance with Comparative Example 1. The tires in accordance with Examples 4 to 6 also have a reduced amount of center misalignment as compared to the tire in accordance with Comparative Example 2.

In particular, by optimizing the ratio d1/L2 and the ratio d2/L2, Examples 2 and 5 have an even further reduced amount of center misalignment than Examples 1 and 4, and Examples 3, 5, and 6 exhibited nearly no amount of center misalignment.

### REFERENCE SIGNS LIST

- 1: Bead portion
- 1a: Bead core
- 2: Carcass
- 3: Belt
- 3a, 3b: Circumferential belt layer
- 3c, 3d: Inclined belt layer
- 4: Tread
- 5: Chafer
- 6: Bead filler
- 7, 7a, 7b: Cushion rubber
- 8: Crown portion molding part
- 9: Side portion molding part
- 9a: Upper side portion molding part
- 9b: Lower side portion molding part

## Claims

1. A pneumatic tire with a rim diameter of 50.8 cm (20 inches) or more and an aspect ratio of 60% or less, the tire being obtainable from a mold for vulcanizing the tire having a crown portion molding part that forms a crown portion of the tire and a separate side portion molding part that forms a side portion of the tire, wherein
a ratio dl/Ll is 0.15 or less, where in a cross-section in a tire width direction before rim assembly, a bead heel T is an intersection between an extension line m1 of a bead base surface and an extension line m2 of a bead back surface, M1 is a midpoint of a line segment A1 connecting the bead heel T with a position P1 of the pneumatic tire corresponding to a split position, L1 in millimeters is a length of the line segment A1, and d1 in millimeters is a distance from the midpoint M1 to an intersection between a tire outer surface and a normal line B1 to the line segment A1 passing through the midpoint M1, and
a split position refers to the portion of the tire where a ridge is formed by inflowing rubber at the border between the crown portion molding part and the side portion molding part at the time of vulcanizing the tire.

2. The pneumatic tire of claim 1, wherein the pneumatic tire further comprises a carcass (2) formed by at least one carcass ply made of steel cords.

3. A mold for vulcanizing a tire, used to manufacture a pneumatic tire with a rim diameter of 50.8 cm (20 inches) or more and an aspect ratio of 60% or less, the mold comprising:
a crown portion molding part (8) that forms a crown portion of the pneumatic tire and a side portion molding part (9) that forms a side portion of the pneumatic tire and is separate from the crown portion molding part (8); wherein
the side portion molding part (9) includes a curved portion capable of abutting a green tire; and
a ratio d2/L2 is 0.15 or less, where M2 is a midpoint of a line segment A2 connecting a split position P2 of the mold for vulcanizing a tire with a radial innermost point S of the curved portion, L2 in millimeters is a length of the line segment A2, and d2 in millimeters is a distance from the midpoint M2 to an intersection between the curved portion and a normal line B2 to the line segment A2 passing through the midpoint M2, wherein
a split position refers to the border between the crown portion molding part and the side portion molding part at the time of vulcanizing the tire.

## Patentansprüche

1. Luftreifen, aufweisend einen Felgendurchmesser von 50,8 cm (20 Zoll) oder mehr und ein Seitenverhältnis von 60% oder weniger, wobei der Reifen aus einer Form zum Vulkanisieren des Reifens erhalten werden kann, welche einen Kronenabschnittformteil, welcher einen Kronenabschnitt des Reifens formt, und einen separaten Seitenabschnittformteil aufweist, welcher einen Seitenabschnitt des Reifens formt, wobei
ein Verhältnis dl/Ll 0,15 oder weniger beträgt, wobei in einem Querschnitt in einer Reifenbreitenrichtung vor dem Felgeneinbau, eine Wulstferse T aus einer Überschneidung zwischen einer Verlängerungslinie m1 einer Wulstbasisfläche und einer Verlängerungslinie m2 einer Wulstrückfläche besteht, wobei M1 ein Mittelpunkt eines Liniensegments A1 ist, welcher die Wulstferse T mit einer Position P1 auf dem Luftreifen verbindet, welche einer Trennposition entspricht, wobei L1 in Millimeter eine Länge des Liniensegments A1 angibt, und d1 in Millimeter einen Abstand vom Mittelpunkt M1 zu einer Überschneidung zwischen einer Reifenaußenfläche und einer normalen Linie B1 zum Liniensegment A1 angibt, welche durch den Mittelpunkt M1 verläuft,
und
eine Trennposition sich auf den Abschnitt des Reifens bezieht, wo eine Rippe durch Einfließen von Gummi am Rand zwischen dem Kronenabschnittformteil und dem Seitenabschnittformteil zum Zeitpunkt des Vulkanisierens des Reifens gebildet wird.

2. Luftreifen nach Anspruch 1, wobei der Luftreifen ferner eine Karkasse (2) umfasst, welche aus zumindest einer Karkassenlage aus Stahlkorden gebildet wird.

3. Form zum Vulkanisieren eines Reifens, welche zur Herstellung eines Luftreifens mit einem Felgendurchmesser von 50,8 cm (20 Zoll) oder mehr und mit einem Seitenverhältnis von 60% oder weniger verwendet wird, wobei die Form umfasst:
einen Kronenabschnittformteil (8), welcher einen Kronenabschnitt des Luftreifens formt und einen Seitenabschnittformteil (9), welcher einen Seitenabschnitt des Luftreifens formt und welcher vom Kronenabschnittformteil (8) getrennt ist;
wobei
der Seitenabschnittformteil (9) einen gekrümmten Abschnitt umfasst, welcher gegen einen Reifenrohling anschlagen kann; und
ein Verhältnis d2/L2 0,15 oder weniger beträgt, wobei M2 ein Mittelpunkt eines Liniensegments A2 ist, welcher eine Trennposition P2 der Form zum Vulkanisieren des Reifens mit einem radial innersten Punkt S des gekrümmten Abschnitts verbindet, wobei L2 in Millimeter eine Länge des Liniensegments A2 angibt und d2 in Millimeter einen Abstand vom Mittelpunkt M2 zu einer Überschneidung zwischen dem gekrümmten Abschnitt und einer normalen Linie B2 zum Liniensegment A2 angibt, welcher durch den Mittelpunkt M2 verläuft, wobei
eine Trennposition sich auf den Rand zwischen dem Kronenabschnittformteil und dem Seitenabschnittformteil zum Zeitpunkt des Vulkanisierens des Reifens bezieht.

## Revendications

1. Bandage pneumatique ayant un diamètre de jante de 50,8 cm (20 pouces) ou plus et un rapport d'aspect de 60% ou moins, le bandage pneumatique pouvant être produit à partir d'un moule pour la vulcanisation du bandage pneumatique, comportant une partie de moulage de la partie de sommet, formant une partie de sommet du bandage pneumatique, et une partie de moulage de la partie latérale séparée, formant une partie latérale du bandage pneumatique, dans lequel :
un rapport dl/Ll correspond à 0,15 ou moins, dans lequel, dans une section transversale, dans une direction de la largeur du bandage pneumatique, avant l'assemblage de la jante, un bout de talon T constitue une intersection entre une ligne d'extension m1 d'une surface de base du talon et une ligne d'extension m2 d'une surface arrière du talon, M1 représentant un point médian d'un segment de ligne A1 connectant le bout de talon T avec une position P1 du bandage pneumatique correspondant à une position divisée, L1 en millimètres représentant
une longueur du segment de ligne A1, et d1 en millimètres représentant une distance entre le point médian M1 et une intersection entre une surface externe du bandage pneumatique et une ligne normale B1 vers le segment de ligne A1 passant à travers le point médian M1 ;
et
une position divisée se réfère à la partie du bandage pneumatique au niveau de laquelle une nervure est formée en introduisant du caoutchouc au niveau de la limite entre la partie de moulage de la partie de sommet et la partie de moulage de la partie latérale lors de la vulcanisation du bandage pneumatique.

2. Bandage pneumatique selon la revendication 1, dans lequel le bandage pneumatique comprend en outre une carcasse (2) formée par au moins une nappe de carcasse composée de câblés d'acier.

3. Moule de vulcanisation d'un bandage pneumatique, utilisé pour fabriquer un bandage pneumatique ayant un diamètre de jante de 50,8 cm (20 pouces) ou plus et un rapport d'aspect de 60% ou moins, le moule comprenant :
une partie de moulage de la partie de sommet (8) formant une partie de sommet du bandage pneumatique, et une partie de moulage de la partie latérale (9) formant une partie latérale du bandage pneumatique et séparée de la partie de moulage de la partie de sommet (8) ;
dans lequel :
la partie de moulage de la partie latérale (9) inclut une partie courbée capable de buter contre un bandage pneumatique vert ; et
un rapport d2/L2 correspond à 0,15 ou moins, M2 représentant un point médian d'un segment de ligne A2 connectant une position divisée P2 du moule pour la vulcanisation d'un bandage pneumatique avec un point radial interne extrême S de la partie courbée, L2 en millimètre représentant une longueur du segment de ligne A2, et d2 en millimètres représentant une distance entre le point médian M2 et une intersection entre la partie courbée et une ligne normale B2 et le segment de ligne A2 passant à travers le point médian M2, dans lequel :
une position divisée se réfère à la limite entre une partie de moulage de la partie de sommet et la partie de moulage de la partie latérale lors de la vulcanisation du bandage pneumatique.
